# FASCICULE DE BREVET EUROPEEN

(11) **EP 4 433 375 B1**
(45) Date de publication et mention de la délivrance du brevet: **09.09.2026**
(21) Numéro de dépôt: 22817965.1
(22) Date de dépôt: 15.11.2022
(51) Int. Cl.: B65D 5/54, B65D 5/42, G06K 19/077

(54) **EMBALLAGE CONNECTÉ ET PROCÉDÉ D'ACTIVATION ASSOCIÉ**
VERBUNDENE VERPACKUNG UND ZUGEHÖRIGES AKTIVIERUNGSVERFAHREN
CONNECTED PACKAGING AND ASSOCIATED ACTIVATION METHOD

(30) Priorité: 15.11.2021 FR 2112077
(43) Date de publication de la demande: 25.09.2024
(73) Titulaire: UNABIZ, 31670 Labège (FR)
(72) Inventeur: CHALBOS, Nicolas, 31600 EAUNES (FR); JELOYAN, Christophe, 31200 TOULOUSE (FR)
(74) Mandataire: Santarelli
(86) Numéro de dépôt international: PCT/EP2022/081939
(87) Numéro de publication internationale: WO 2023/084106

(56) Documents cités:
- US-A1- 2005 184 871
- US-A1- 2006 125 642
- US-A1- 2008 149 584
- US-A1- 2019 382 173
- US-A1- 2020 364 530

## Description

### DOMAINE TECHNIQUE DE L'INVENTION

Le domaine de l'invention est celui des objets connectés.

Plus précisément, l'invention concerne un emballage connecté et un procédé d'activation associé.

L'invention trouve notamment des applications en logistique pour le suivi des emballages ou des commandes associées.

### ÉTAT DE LA TECHNIQUE

Il est connu de l'art antérieur des techniques de suivi d'objets, tels que des colis.

Ces techniques de suivi sont généralement basées sur une identification du colis, par l'intermédiaire d'une étiquette présentant un identifiant sous la forme d'un code barre ou d'un code de type QR (acronyme du terme anglais « *Quick Response* »), ou par l'intermédiaire d'une étiquette électronique de type NFC (acronyme du terme anglais « *Near Field Communication* ») ou de type RFID (acronyme du terme anglais « Radio Frequency Identification »). Il peut également s'agir d'étiquettes connectées communicant sur un réseau de télécommunication cellulaires de type 3G, 4G, voire 5G ou sur un réseau de télécommunications de type étendu à basse communication (LPWAN, acronyme du terme anglais « *Low Power Wide Area Network* »).

Dans tous les cas, les colis présentant de telles étiquettes sont suivis soit en scannant l'étiquette à intervalles réguliers, soit par un traitement des signaux émis par les étiquettes connectées.

L'inconvénient majeur de ces techniques de l'art antérieur est d'une part qu'elle sont liées à l'ajout d'une étiquette sur un colis, l'étiquette pouvant être masquée voire arrachée en cours de manutention, et d'autre part qu'elle reste limitée à un suivi standard des colis entre la préparation du colis et la livraison au destinataire du colis.

Après la livraison du colis, aucun suivi n'est opéré car l'emballage du colis est généralement mis au rebus pour être détruit ou recyclé.

Il existe donc un besoin d'améliorer les emballages afin de pouvoir les suivre tout le long de leur vie, soit pour s'assurer qu'ils ont bien été recyclés, soit pour permettre leur réutilisation lorsqu'ils restent en l'état.

A cet effet, il a par exemple été conçu de nouvelles techniques d'emballages fabriqués dans un matériau durable afin d'être réutilisés un grand nombre de fois. Ces emballages comprennent un dispositif électronique permettant de suivre l'emballage et de le géolocaliser par l'intermédiaire d'une puce de type GPS (acronyme angle de « *Global Positioning System* »). De tels emballages peuvent comprendre des écrans de type à encre électronique afin de présenter une étiquette qui peut être modifiée aisément, et des moyens de communication sans fil, par exemple de type 4G, pour échanger des données entre l'emballage et un serveur distant.

Toutefois, l'inconvénient majeur de ces nouvelles techniques est qu'elle reste onéreuse et plus complexe à recycler, car intégrant un grand nombre d'éléments électroniques distincts et variés. En outre, ces nouvelles techniques d'emballage intègrent des batteries nécessitant d'être rechargées occasionnellement, nécessitant un suivi régulier de l'état des batteries pour éviter que le colis ne devienne inutilisable au cours de l'acheminement du colis entre l'expéditeur et le destinataire.

Un exemple d'emballage connecté de l'art antérieur est par exemple décrit dans US 2020/364530 A1.

Aucun des systèmes actuels ne permet de répondre simultanément à tous les besoins requis, à savoir de proposer une technique d'emballage connecté qui puisse être facilement recyclable tout en ayant une grande autonomie, même pendant une phase importante de stockage.

### EXPOSÉ DE L'INVENTION

La présente invention vise à remédier à tout ou partie des inconvénients de l'état de la technique cités ci-dessus.

À cet effet, l'invention vise, un emballage connecté comprenant un dispositif électronique alimenté par une batterie.

L'emballage peut être de tout type et de toute forme. Il peut s'agir par exemple d'un emballage parallélépipédique destiné à transporter au moins un objet, ou d'un emballage globalement plat comme une enveloppe.

L'emballage peut être de type souple ou rigide, formé par exemple en carton ou en plastique.

L'emballage peut être par exemple de type pliable, stocké à plat pour en limiter le volume, et remis en forme par une opération de pliage afin de pouvoir être utilisé.

Selon l'invention, l'emballage connecté comprend également un dispositif de détection d'une modification relative à une liaison entre deux éléments de l'emballage connecté, le dispositif de détection étant configuré pour commuter un mode du dispositif électronique lors d'une détection de ladite modification.

Ainsi, une meilleure gestion de la consommation électrique de l'emballage connecté peut être effectuée en conditionnant le mode du dispositif électronique par exemple à un pliage de l'emballage connecté ou à l'ouverture de l'emballage connecté.

La liaison entre deux éléments de l'emballage connecté peut être par exemple une articulation entre deux éléments de l'emballage connecté comme un flanc et un rabat, deux flancs ou deux rabats. La modification détectée peut être alors une modification de l'angle entre les deux éléments qui sont alignés dans une position de stockage puis forment un angle, par exemple de 90°, dans une position d'utilisation.

La liaison entre deux éléments de l'emballage connecté peut être également de type amovible, par exemple formée par le retrait d'une partie de l'emballage, telle qu'une languette, solidarisant deux rabats de l'emballage connecté. La modification détectée peut être alors le retrait de la partie détachable permettant de désolidariser les deux rabats afin d'ouvrir l'emballage connecté.

Le mode du dispositif électronique peut être par exemple parmi l'un des modes suivants :
- éteint ;
- en veille ou en sommeil ;
- activé ;
- désactivé ;
- en cours de livraison ;
- en cours de retour ;
- ouvert ;
- fermé.

Il convient de souligner qu'outre les modes « éteint » ou « en veille », les modes peuvent se combiner entre eux.

La commutation de mode du dispositif électronique peut également être appelée commutation d'état. Il convient de souligner que la commutation entraîne une modification du comportement du dispositif électronique qui peut par exemple changer le type, le contenu ou la fréquence des signaux à transmettre. Il convient de souligner qu'un dispositif électronique transmettant simplement une valeur mesurée évoluant au cours du temps, n'effectue pas de commutation de mode au sens de la présente invention.

Grâce à la détection des modifications qui permettent de modifier le mode du dispositif électronique, il est ainsi possible de suivre précisément l'évolution de l'emballage connecté par exemple au cours d'une commande. L'emballage connecté est généralement stocké dans un premier temps à plat puis plié afin d'être rempli par un objet. L'emballage connecté est ensuite fermé pour être expédié. Au cours du transport, l'emballage connecté transite dans différents entrepôts et moyens de transport avant d'arrivée à son point de livraison où il est ouvert. L'emballage connecté peut ensuite être renvoyé soit pour être réutilisé ou recyclé. Chaque étape peut être différenciée par un mode distinct configurant le dispositif électronique à envoyer ou non des signaux à un intervalle défini, à destination d'au moins une borne d'un réseau de télécommunication, par exemple 3G, 4G, 5G, ou préférentiellement de type adapté pour des applications de type « Internet des objets » (« *Internet of Things* » ou IoT dans la littérature anglo-saxonne).

Le réseau de communication comprend généralement une pluralité de bornes, appelées couramment stations de base, formant un maillage adapté à la portée des signaux. Dans le cas d'un réseau de communication pour des applications de type « Internet des objets » (IoT), la portée des signaux est plus grande que la portée des signaux couramment utilisés dans les technologiques de télécommunication selon les normes 3G, 4G ou 5G, et peuvent atteindre des dizaines de kilomètres.

Il convient de souligner que les signaux émis par le dispositif électronique sont généralement reçus par une pluralité de bornes à proximité du dispositif électronique, notamment pour permettre une meilleure géolocalisation du dispositif électronique.

Préférentiellement, le dispositif de détection est configuré pour commuter un mode du dispositif électronique de manière concomitante à la détection de la modification relative à la liaison, sans attente d'une action complémentaire.

En d'autres termes, la commutation d'un mode du dispositif électronique est uniquement conditionnée par la détection de la modification relative à la liaison, par exemple lors du pliage de l'emballage connecté ou de l'ouverture de l'emballage connecté. Il s'agit d'une configuration de type « intégration transparente (en anglais « *seamless integration* »), c'est-à-dire que le dispositif de détection est ajouté sans difficultés par rapport à un emballage classique. Il convient de souligner qu'aucune action complémentaire n'est nécessaire pour activer le dispositif électronique, l'activation étant effectuée par exemple en pliant l'emballage connecté ou en l'ouvrant.

Dans des modes de réalisation de l'invention, lorsque le dispositif électronique commute entre deux modes, le dispositif de détection est configuré pour effectuer au moins l'une des actions suivantes : - déterminer ou modifier la fréquence d'émission des signaux par le dispositif électronique;
- déterminer ou modifier les informations à transmettre par les signaux.

De plus, les actions supplémentaires suivantes peuvent être effectuées :
- modifier l'état allumé ou éteint du dispositif électronique ;
- connecter le dispositif électronique à une alimentation électrique ou à une carte comprise dans l'emballage connecté ;
- associer le dispositif électronique, par l'intermédiaire d'un identifiant, avec un service informatique opéré à distance ;
- déclencher une action immédiate ou différée du dispositif électronique, tel que l'émission d'un signal ou la mise en marche d'une machine à état.

En d'autres termes, l'emballage connecté est activé par la détection d'une modification relative à une liaison de l'emballage connecté.

Il convient par ailleurs de souligner que le service informatique peut être de tout type, par exemple lié à un suivi de commande d'un service marchand.

Dans des modes de réalisation particuliers de l'invention, le dispositif de détection d'une modification relative à une liaison comprend au moins une boucle à encre conductrice traversant ladite liaison.

En d'autres termes, la boucle à encre conductrice traverse au moins une pliure, une jonction ou un bord d'une ouverture dudit emballage connecté.

Ainsi, la boucle à encre conductrice qui est à cheval entre deux éléments entourant la liaison, est par exemple rompue lorsque la liaison est modifiée, par exemple par le pliage d'une jonction entre deux éléments ou par l'arrachement d'une partie détachable de l'emballage connecté traversant la boucle à encre conductrice. La modification de la boucle à encre conductrice, qui se traduit par une variation de l'impédance de la boucle qui devient par exemple infinie, se traduit par une détection de la modification relative à la liaison et par conséquent par l'activation du dispositif électronique de l'emballage connecté.

Il convient de souligner que la boucle à encre conductrice peut varier d'impédance sans forcément être rompue, par exemple lorsque la boucle à encre conductrice est portée par un substrat élastique, se déformant sous l'effet de la modification de la liaison.

Dans des modes de réalisation particuliers de l'invention, au moins une boucle à encre conductrice est formée par un pliage dudit emballage connecté.

En d'autres termes, une telle boucle à encre conductrice est ouverte lorsque l'emballage connecté est stocké à plat puis fermée lorsque l'emballage connecté est plié.

Dans des modes de réalisation particuliers de l'invention, le dispositif de détection comprend un moyen de mesure d'une variation d'impédance.

Dans des modes de réalisation particuliers de l'invention, le dispositif de détection d'une modification relative à une liaison comprend un fil fusible traversant ladite liaison.

La détection est ainsi effectuée lorsque le fil fusible est rompu.

Dans des modes de réalisation de l'invention, le dispositif électronique comprend une antenne et un émetteur d'un signal par ladite antenne après la commutation d'état dudit dispositif électronique, le signal comprenant un identifiant dudit emballage connecté.

Dans des modes de réalisation particuliers de l'invention, le dispositif électronique est configuré pour émettre au moins un signal en fonction du mode du dispositif électronique et/ou en fonction de la valeur d'au moins un capteur.

Préférentiellement, au moins un capteur est choisi parmi :
- capteur de mouvement ;
- capteur de température ;
- capteur de champ magnétique.

Dans des modes de réalisation particuliers de l'invention, l'emballage connecté est configuré pour être globalement plat dans une première configuration dite de stockage et pour former un contenant en volume dans une deuxième configuration dite pliée, le dispositif électronique étant en sommeil dans la configuration de stockage et activé dans la configuration pliée.

Dans des modes de réalisation particuliers de l'invention, tout ou partie du dispositif électronique est porté par une partie détachable dudit emballage connecté.

Ainsi, l'emballage connecté est plus facilement recyclable.

Préférentiellement, la partie détachable est une languette formée le long d'un rabat de l'emballage connecté, s'étendant d'un bord à un autre bord du rabat de telle sorte à permettre l'ouverture de l'emballage connecté lors de l'arrachement de la partie détachable.

Dans des modes de réalisation particuliers de l'invention, l'emballage connecté est globalement formé en carton multicouche délimité par deux couches externes, dans lequel tout ou partie du dispositif électronique est compris entre les deux couches externes du carton.

En d'autres termes, le dispositif électronique est intégré en tout ou partie à l'intérieur des couches du carton. Par exemple le substrat portant la boucle à encre conductrice correspond à une couche interne de l'emballage connecté.

Dans des modes de réalisation particuliers de l'invention, le dispositif électronique comprend un dispositif de stockage d'une énergie électrique alimentant le dispositif électronique.

L'invention vise également un procédé d'activation d'un emballage connecté selon l'un quelconque des modes de réalisation précédents, comprenant des étapes de :
- détection d'une modification de forme par l'emballage connecté ;
- changement d'un mode du dispositif électronique de l'emballage connecté, à la suite de la détection de la modification de forme.

Dans des modes particuliers de mise en œuvre de l'invention, le procédé d'activation comprend également des étapes de :
- transmission par le dispositif électronique de l'emballage connecté d'un signal comprenant un identifiant dudit emballage connecté à une borne d'un réseau de télécommunication à proximité de l'emballage connecté ;
- appairage dudit emballage connecté à un service informatique opéré par une unité de traitement informatique connectée à la borne.

Il convient de souligner que la borne peut être notamment connue sous le terme de station de base.

Dans des modes particuliers de mise en œuvre de l'invention, une identification physique de l'emballage connecté est associée à une identification logique du service informatique, l'identification logique pouvant être un numéro de commande.

Dans des modes particuliers de mise en œuvre de l'invention, le procédé d'activation comprend également une étape de détection et de suivi dudit emballage connecté dans un environnement, tel qu'un centre de tri ou une zone de couverture d'un réseau de télécommunications.

Un réseau de télécommunications peut être par exemple de type LPWAN ou de type cellulaires (3G, 4G ou 5G).

Dans des modes particuliers de mise en œuvre de l'invention, le procédé d'activation comprend également une étape d'activation d'une machine à état côté réseau en fonction des données d'un message transmis par l'emballage connecté et/ou en fonction de métadonnées élaborées par le réseau et/ou du mode d'activation de l'emballage connecté et/ou d'un identifiant logique associé à l'emballage connecté.

Préférentiellement, la machine à état activé côté réseau permet d'allouer au dispositif électronique de l'emballage connecté au moins un abonnement à au moins un service.

Dans des modes particuliers de mise en œuvre de l'invention, le procédé d'activation comprend également une étape d'activation d'une machine à état côté emballage connecté, à la suite d'une réception d'un message envoyé par le réseau.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :
- [Fig 1] est une vue en perspective d'un exemple de mode de réalisation d'un emballage connecté selon l'invention, dans une configuration dite de stockage ;
- [Fig 2] est une vue en perspective de l'emballage connecté de la figure 1 dans une configuration d'utilisation, ouverte ;
- [Fig 3] correspond à la vue de la figure 2, la face supérieure ayant été fermée ;
- [Fig 4] est un schéma synoptique d'un exemple de mode de mise en œuvre d'un procédé d'activation de l'emballage connecté illustré en figure 1 à figure 3.

### DESCRIPTION DÉTAILLÉE DE L'INVENTION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

### Exemple d'un mode de réalisation particulier

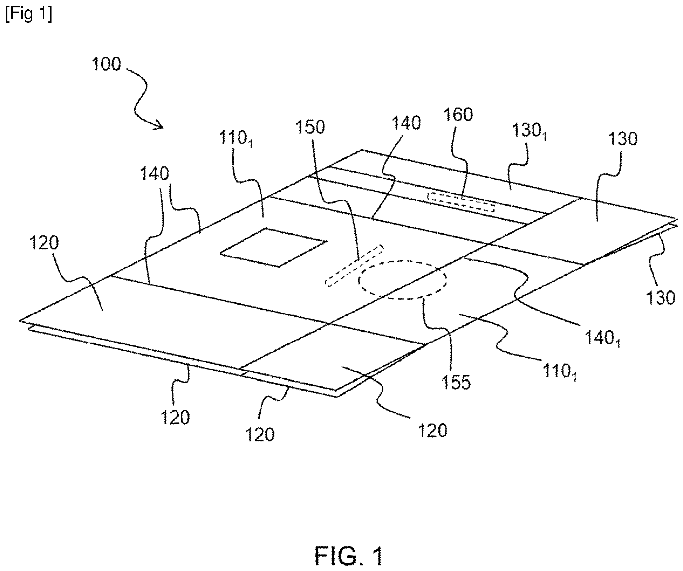

La figure 1, la figure 2 et la figure 3 sont des vues d'un exemple non limitatif de mode de réalisation d'un emballage connecté 100 selon l'invention, respectivement dans une configuration de stockage, dans une configuration d'utilisation ouverte et dans une configuration d'utilisation fermée.

L'emballage connecté 100 est formé dans le présent exemple non limitatif de l'invention par quatre faces 110, quatre rabats 120, articulés par rapport aux faces 110 et destinés à former le fond 125 de l'emballage connecté 100, et quatre rabats 130 destinés à former la face supérieure 135 de l'emballage connecté 100. Les flancs 110 et les rabats 120 et 130 de l'emballage connecté sont formées dans une pièce unique en carton et s'articulent autour de pliures 140 configurées dans l'épaisseur du carton.

Dans la configuration de stockage, l'emballage connecté 100 qui est globalement plat afin de limiter son volume, les rabats 120 et 130 étant alignés par rapport aux flancs 110 respectifs. L'emballage connecté 100 est ensuite plié en articulant les flancs 110 autour des pliures 140, formant un espace intérieur 101 de type parallélépipède rectangle. L'espace intérieur est fermé dans la partie basse par l'articulation des rabats 120 pour former le fond 125. La face supérieure 135 de l'emballage connecté 100, fermant l'espace intérieur 101, est quant à elle formée par l'articulation des rabats 130.

Afin de rigidifier le fond 125, les rabats 120 sont maintenus ensemble par exemple par un moyen adhésif tel qu'une colle ou un ruban adhésif.

De manière similaire, les rabats 130 sont également maintenus ensemble par exemple par un moyen adhésif, afin notamment d'éviter que la face supérieure 135 ne s'ouvre inopinément au cours des phases de manutention et de transport de l'emballage connecté 100.

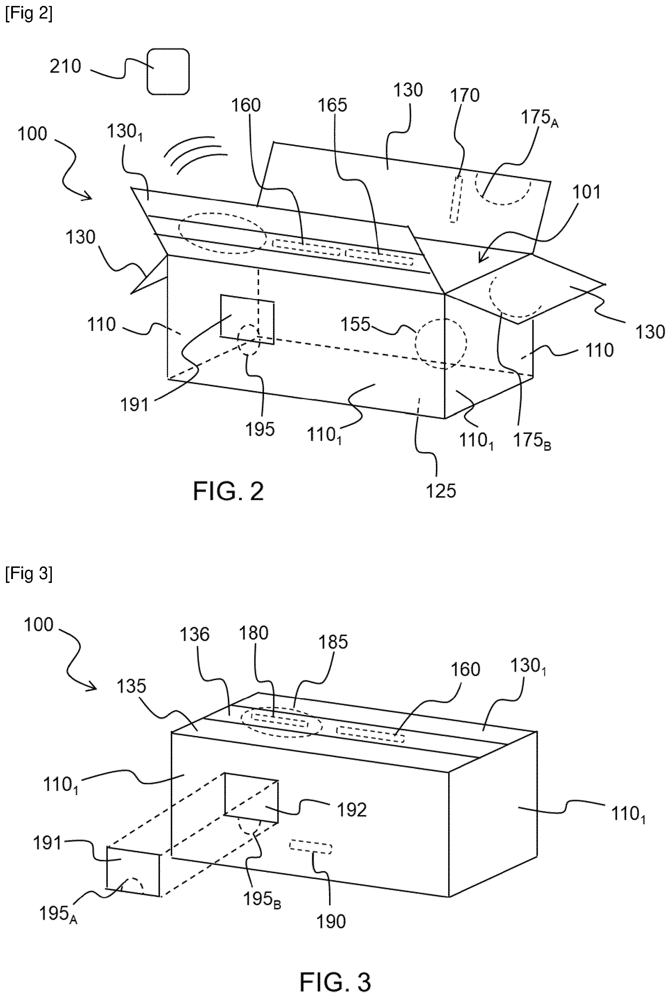

Une fois dans la configuration d'utilisation fermée telle qu'illustrée en figure 3, l'emballage connecté 100 peut être ouvert par exemple en tirant sur une partie détachable telle qu'une languette 136 configurée le long du rabat 130₁ fermant la face supérieure 135. La languette 136 qui s'étend d'un bord à un bord opposé, est accessible depuis l'extérieur de l'emballage connecté 100 afin de pouvoir être arraché aisément par un individu cherchant à ouvrir l'emballage connecté 100.

Afin de pouvoir repérer une utilisation de l'emballage connecté 100 qui est initialement rangé dans la configuration de stockage illustrée en figure 1, l'emballage connecté 100 comprend ici avantageusement un dispositif 150 de détection d'une modification de forme de l'emballage connecté 100. Dans le cas présent, la modification de forme détectée par le dispositif 150 est relative à une pliure 140_{A} entre deux flancs 110₁. Plus précisément, la modification détectée est ici une modification d'angle entre les deux flancs 110_{A} qui passent dans le présent exemple d'une position alignée, dans la configuration de stockage, à une position avec un angle de 90° dans la configuration d'utilisation.

Alternativement les deux flancs 110 entourant la pliure objet de la détection sont superposés.

À cet effet, le dispositif 150 de détection comprend par exemple une boucle 155 à encre conductrice traversant la pliure 140₁ et dont l'impédance est modifiée par l'angle de la pliure 140₁. En effet, la boucle 155 à encre conductrice peut être rompue au moment du pliage des flancs 110, entraînant une variation d'impédance facilement détectable car passant d'une valeur donnée à une valeur infinie.

Alternativement, la boucle 155 à encre conductrice peut être déformée de manière élastique lors du pliage des flancs, ce qui entraîne une modification de la valeur d'impédance de la boucle 155.

La boucle 155 à encre conductrice peut ainsi être portée par un substrat, élastique ou rigide, collé en surface du carton ou inclus à l'intérieur d'un carton multicouche.

Le dispositif 150 de détection peut comprendre un moyen de mesure d'une variation d'impédance, tel qu'un analyseur d'impédance ou utilisant un pont RLC pour mesurer les différentes composantes de l'impédance. Il convient de souligner que le cas d'un courant continu, l'impédance correspond à une résistance qui peut être mesurée par un ohmmètre.

Alternativement, le dispositif 150 de détection peut comprendre un dispositif électronique, tel qu'un transistor, dont l'état est modifié par la variation d'impédance de la boucle 155 à encre conductrice.

Lorsqu'une modification de forme de l'emballage connecté 100, ici par pliage notamment autour de la pliure 140₁, est détectée, le dispositif 150 de détection est configuré pour commuter un mode d'un dispositif électronique 160 compris dans l'emballage connecté 100. Il convient de souligner que cette commutation de mode est avantageusement effectuée sans action complémentaire autre que le pliage de l'emballage connecté 100. Il s'agit ainsi d'une configuration de type « intégration transparente ».

La commutation de mode du dispositif électronique 160 qui est ici alimenté électriquement par une batterie 165 comprise également dans l'emballage connecté 100, correspond généralement à une activation du dispositif électronique 160. On entend par activation du dispositif électrique au moins l'une des actions suivantes :
- modification de l'état allumé ou éteint du dispositif électronique 160 ;
- modification de l'état « en sommeil » ou « en veille » du dispositif électronique 160 à un état « actif ». L'état « en sommeil » ou « en veille » correspond à une consommation minimale du dispositif électronique 160 où uniquement le dispositif 150 de détection est alimenté par la batterie 165 ;
- connexion du dispositif électronique 160 à la batterie 165 ;
- connexion du dispositif électronique 160 à une carte électronique comprise dans l'emballage connecté 100 ;
- association du dispositif électronique 160 par l'intermédiaire d'un identifiant associé au dispositif électronique 160, à un service informatique opéré généralement sur un serveur distant ;
- déclenchement d'une action immédiate ou différée du dispositif électronique 160, tel que l'émission d'un signal par une antenne du dispositif électronique 160 à destination par exemple d'un réseau cellulaire adapté pour des applications de type « internet des objets » (IoT), ou la mise en marche d'une machine à état.

La commutation de mode correspond à une modification d'une configuration d'émission d'un signal par le dispositif électronique, au niveau de sa fréquence ou du type de données transmises par le signal.

Il convient de souligner que la batterie 165 qui est un dispositif de stockage d'une énergie électrique peut ne pas être comprise dans l'emballage connecté 100. Auquel cas, l'alimentation électrique est fournie par un élément extérieur de l'emballage connecté 100, comme par exemple par une boucle à induction ou par l'intermédiaire d'un lecteur, par exemple de type RFID, qui est capable de donner l'état de la boucle 150 de détection, en fournissant l'énergie électrique pour tester la boucle 150 de détection, en mesurant par exemple son impédance.

En complément, l'émission d'un signal peut également être conditionnée à la valeur d'au moins un capteur choisi parmi :
- un capteur de mouvement, tel qu'un accéléromètre ou un gyroscope ;
- un capteur de température ;
- un capteur de champ magnétique.

Par exemple, lorsque le dispositif électronique 160 est activé, le conditionnement des émissions avec la mesure d'au moins un capteur permet notamment de limiter la consommation énergétique du dispositif électronique 160. En effet, l'émission d'un signal peut être effectué par exemple lorsqu'un mouvement de l'emballage connecté 100 est détecté, lorsque l'emballage connecté 100 arrive dans un entrepôt dont la température est différente, ou lorsque l'emballage connecté 100 traverse une barrière magnétique utilisée pour différencier des zones de manutention d'un entrepôt.

Une différence de température peut être mesurée par exemple lorsque la température de l'entrepôt est différente de la température extérieure ou de la température mesurée au cours du transport.

L'activation du dispositif électronique 160 est effectuée dans le présent exemple non limitatif de l'invention par le pliage de l'emballage connecté 100 en vue de son utilisation.

Cette activation peut être limitée dans le temps, par exemple dans un temps prédéterminé, jusqu'à la fermeture de l'emballage connecté 100 ou jusqu'à la réception d'une commande par l'intermédiaire d'un signal émis à destination de l'emballage connecté 100.

La fermeture de l'emballage connecté 100, qui est un autre type de modification de forme de l'emballage connecté 100, peut être détectée par un deuxième dispositif 170 de détection qui comprend également ici une boucle 175 à encre conductrice formée en deux parties 175_{A}, 175_{B} sur deux rabats 130₂ distincts. La boucle 175 est formée au moment de la fermeture de l'emballage connecté 100, soit en superposant les deux rabats 130₂ comme illustré en figure 2, soit par continuité entre deux rabats 130. Des détrompeurs (non représentés sur la figure 2) peuvent être avantageusement compris pour assurer la connexion des deux parties 175_{A} et 175s de la boucle 175 de détection. La détection de la fermeture correspond à l'établissement d'un entre les deux rabats 130₂ qui peuvent être maintenus l'un à l'autre par un moyen adhésif.

Lorsque l'emballage connecté 100 est fermé comme illustré en figure 3 et a été livré à son destinataire, l'ouverture de l'emballage connecté 100, qui est un autre type de modification de forme de l'emballage connecté 100, peut également être détectée par un troisième dispositif 180 de détection qui comprend également ici une boucle 185 à encre conductrice traversant au moins un bord de la languette 136.

Afin de pouvoir suivre le retour de l'emballage connecté 100, voire de s'assurer de son recyclage, l'emballage connecté 100 peut également comprendre un dispositif 190 de détection d'une modification liée au retrait d'une partie détachable 191 distincte de la languette 136 permettant l'ouverture de l'emballage connecté 100. La partie détachable 191 peut présenter l'étiquette du destinataire de l'emballage connecté 100 afin de faire apparaitre une autre étiquette 192 pour le retour de l'emballage connecté 100. La variation d'impédance d'une boucle 195 à encre conductrice traversant au moins un bord de la partie détachable 191 détectée par le dispositif 190 de détection enclenche la commutation d'un état dit « de retour » au niveau du dispositif électronique 160. Plus précisément, la boucle 195 est ici rompue en deux parties 195_{A} et 195s lorsque la partie détachable 191 est retirée, entraînant une impédance infinie qui traduit une modification de forme de l'emballage connecté 100 par le retrait de la partie détachable 191.

Différents modes de configuration de fonctionnement de l'emballage connecté 100 peuvent ainsi être déterminés.

Il convient de souligner que le présent exemple non limitatif de l'invention peut être adapté en fonction des besoins du cas d'usage de l'emballage connecté 100. Il peut par exemple être choisi de laisser activer le dispositif électronique 160 pendant la fermeture de l'emballage connecté, ou de n'activer le dispositif électronique 160 qu'au moment de l'ouverture de l'emballage connecté 100.

En outre, le nombre et la position des dispositifs de détection sont donnés ici à titre indicatif, certains dispositifs de détection pouvant être retirés ou communs. La configuration des dispositifs de détection et des boucles à encre conductrice peuvent être similaires.

Dans des variantes de ce mode de réalisation, au moins un dispositif de détection comprend un fil fusible en remplacement ou en complément de la boucle à encre conductrice dudit dispositif de détection.

Il convient de souligner des détections redondantes peuvent être prévues pour chaque dispositif de détection, en combinant par exemple deux boucles à encre conductrice ou une boucle à encre conductrice et un fil fusible.

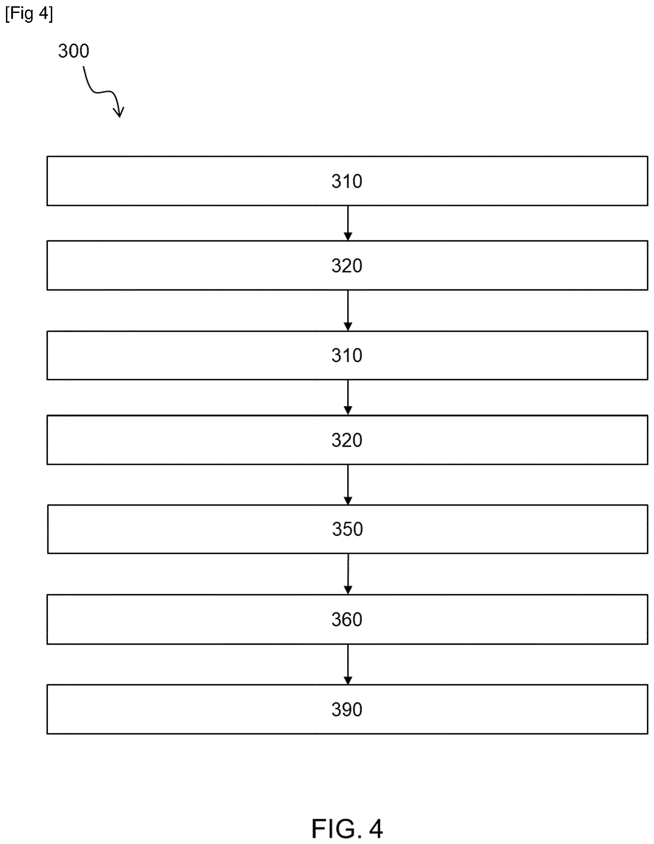

La figure 4 illustre sous la forme d'un schéma synoptique, un exemple de mise en œuvre d'un procédé 300 d'activation de l'emballage connecté 100 qui est par exemple rangé dans une configuration de stockage en attente d'être utilisé pour une opération de manutention telle que la livraison d'une commande. Dans cette configuration de stockage, le dispositif électronique 160 est préférentiellement dans un mode dit « en sommeil », dans lequel la consommation énergétique est minimale.

Le procédé 300 d'activation comprend une première étape 310 de détection d'une modification de forme de l'emballage connecté 100 par l'intermédiaire de l'un des dispositifs 150, 170, 180, 190 de détection de l'emballage connecté 100. Préférentiellement, la modification de forme détectée dans la première étape correspond au pliage de l'emballage connecté 100 entre la configuration de stockage et la configuration d'utilisation, c'est-à-dire à celle détectée par le dispositif 150 de détection.

La détection d'une modification de forme entraîne le changement de mode du dispositif électronique 160 qui passe dans un premier temps du mode « en sommeil » à un mode « activé ».

L'activation du dispositif électronique 160 peut ainsi correspondre à allumer le dispositif électronique 160, en le connectant par exemple à la batterie 165.

L'activation du dispositif électronique 160 peut également correspondre à une connexion du dispositif électronique 160 à une carte électronique, telle qu'une carte de communication sans fil.

Un appairage du dispositif électronique 160 par l'intermédiaire d'un identifiant associé au dispositif électronique 160, peut également être effectuée lors de l'activation.

À cet effet, le dispositif électronique 160 de l'emballage connecté 100 transmet, par l'intermédiaire d'une antenne (non représentée), un signal comprenant un identifiant de l'emballage connecté 100, tel qu'une adresse MAC ou un identifiant unique stocké dans une mémoire du dispositif électronique 160, au cours d'une étape 330. Le signal est émis à destination du réseau de télécommunication et est reçu par au moins une borne 210 à proximité de l'emballage connecté 100, préférentiellement par une pluralité de bornes du réseau de télécommunication.

L'appairage de l'emballage connecté est ensuite effectué au cours d'une étape 340. Cet appairage est par exemple effectué avec un service informatique opéré à distance, tel que le service de gestion des commandes ou le service de gestion de la livraison. L'identifiant du dispositif électronique 160, représentant l'emballage connecté 100, peut ainsi être associé à un identifiant logique tel qu'un identifiant de la commande et/ou du transporteur opérant la manutention jusqu'au point de livraison.

L'activation peut également déclencher une action immédiate ou différée du dispositif électronique 160, telle que l'émission d'un signal ou la mise en marche d'un mode donné d'une machine à état.

Il convient de souligner que la machine à état peut être incluse dans le dispositif électronique 160, en étant exécutée par exemple par un processeur informatique inclus dans le dispositif électronique 160. La machine à état de l'emballage connecté 100 est configurée pour transmettre des paramètres de configuration au dispositif électronique 160. Les paramètres de configuration sont notamment fonction du mode du dispositif électronique 160 et permettent par exemple de définir la fréquence d'émission des signaux, le type de message transmis par les signaux, *etc.*

La machine à état qui est activée, peut être également du côté réseau, par exemple au niveau du serveur distant opérant le service informatique.

La machine à état côté réseau peut ainsi allouer par exemple un ou plusieurs abonnement(s) à un ou plusieurs service(s) à l'emballage connecté 100 en fonction de l'état en cours de l'emballage connecté - actif, en sommeil, ouvert, fermé, *etc.* - et/ou en fonction de données transportées par le réseau, et/ou en fonction de métadonnées liées au réseau.

Un service peut être par exemple :
- un service de type Wi-Fi^{®}, permettant notamment de localiser le dispositif électronique 160 de l'emballage connecté 100 par un échange d'identifiant avec un borne Wi-Fi à proximité, dont la position est avantageusement connue ;
- un service de géolocalisation basé sur le réseau de communication, en analysant les signaux reçus par des stations de base du réseau et/ou par l'emballage connecté 100, au travers de la puissance des signaux reçus (RSSI pour l'acronyme anglais « *Received Signal Strength Indicator* ») et de la position connue des stations de base ;
- un service de géolocalisation satellitaire de type GPS (acronyme du terme anglais « *Global Positioning System* ») ;
- un service dit de *« data integrity* » permettant de vérifié la cohérence, la complétude et l'exactitude des données transportées ;
- un service de fragmentation de données ;
- un service de chiffrement et/ou d'offuscation de données.

Les métadonnées correspondent par exemple aux données connues du côté réseau, telles que l'identification des stations de base recevant les signaux, les fréquences des signaux reçus, les temps de réception aux différentes stations, les puissances des signaux reçus, *etc.* Les métadonnées peuvent notamment permettre d'estimer la position de l'emballage connecté 100 au sein d'un environnement.

Les données correspondent par exemple aux données transportées dans la charge utile, couramment appelée par le terme anglais « *payload* », mais aussi aux données disponibles dans le réseau ou dans les services, et qui peuvent enrichir la charge utile. Par exemple, le message d'activation qui fait suite à l'ouverture ou à la fermeture de l'emballage connecté 100 peut transporter l'identifiant physique de l'objet.

À partir de l'identifiant physique, de la position estimée de l'emballage connecté 100 via les métadonnées - identifiant de la station de base du réseau, par exemple de type nano, communicant avec l'emballage connecté 100, identifiant d'un émetteur placé dans le réseau, mesure de la puissance du signal reçu (RSSI), estimation de la distance entre l'emballage connecté 100 et la station de base, couramment connue sous le terme anglais « *time of flight », etc.* - et des systèmes d'information gérant la commande et/ou la livraison, il est possible d'obtenir l'identifiant logique associé au contenu de l'emballage connecté 100.

Des règles concernant le mode d'émission de l'emballage connecté 100 et/ou les services dont l'emballage connecté 100 peut bénéficier peuvent également être déterminées en fonction de l'identifiant logique. Le mode d'émission peut être par exemple conditionné par l'envoi d'un message via une communication descente, couramment appelée par le terme anglais « *downlink* » pour définir une machine à état adaptée à l'objet transporté par l'emballage connecté 100.

Par exemple, un emballage ayant un identifiant logique commençant par "GAME1", c'est-à-dire traduisant le fait qu'il transporte un jouet ayant une valeur inférieure à 10 euros, peut être traité différemment d'un emballage ayant un identifiant commençant par "GAME9" qui signifie le transport d'un jouet d'une valeur supérieure à 90 euros. En conséquence, le niveau de qualité et les services pour ces deux objets peuvent être avantageusement différents.

La fréquence d'émission des signaux par l'emballage connecté 100 peut être adaptée selon la distance à parcourir par l'emballage connecté 100, le temps d'activation de l'emballage connecté 100, *etc.*

Le procédé 300 d'activation peut ainsi comprendre une étape 350 d'activation d'une machine à état côté réseau en fonction des données d'un message transmis par l'emballage connecté et/ou en fonction de métadonnées élaborées par le réseau et/ou du mode d'activation de l'emballage connecté.

Lors d'une étape 360, une activation d'une machine à état du côté de l'emballage connecté 100 peut également être conditionnée à la réception d'un message envoyé par le réseau pour par exemple modifier une configuration de données à transmettre par le dispositif électronique 160 de l'emballage connecté 100.

Le procédé 300 d'activation peut également comprendre une étape 390 de suivi de l'emballage connecté 100 dans un environnement, tel qu'un centre de tri pour une manutention dans le cadre d'un transport ou d'une commande, ou un centre de tri en vue d'un recyclage de l'emballage connecté 100, voire plus généralement à l'intérieur d'une zone de couverture d'un réseau de télécommunication de type LPWAN.

Il convient en effet de souligner que le dispositif électronique 160 de l'emballage connecté 100 peut être avantageusement retiré aisément de l'emballage connecté 100 afin de dissocier l'emballage en lui-même qui est ici formé en carton et la partie électronique qui est recyclée selon une filière distincte. Le dispositif électronique 160 peut ainsi être sur une partie détachable de l'emballage connecté. En d'autres termes, une telle partie détachable est désolidarisée de l'emballage connecté en vue du recyclage du dispositif électronique.

Il peut ainsi être prévu que le dispositif électronique 160 et l'éventuelle batterie 165 soient portés par la languette 136 d'ouverture de l'emballage connecté 100 et que la languette 136 soit insérée à l'intérieur de l'emballage connecté 100 afin de renvoyer l'emballage connecté 100 vers un centre de tri pour le recyclage. Il convient de souligner que dans ce cas-là le dispositif électronique 160 qui est toujours actif change de mode au moment de l'arrachement de la languette 136 grâce au dispositif 180 de détection.

## Revendications

1. Emballage connecté (100), comprenant un dispositif électronique (160), et comprenant également au moins un dispositif (150, 170, 180, 190) de détection d'une modification de forme dudit emballage connecté, au moins un dispositif de détection étant configuré pour commuter un mode du dispositif électronique lors d'une détection de ladite modification, **caractérisé en ce que** la commutation entraînant une modification d'une configuration d'émission d'au moins un signal par le dispositif électronique, la configuration d'émission comprenant au moins l'un de :
• (i) une fréquence d'émission,
• (ii) un type de données transmises,
dans lequel le dispositif électronique (160) comprend une antenne et un émetteur d'un signal par ladite antenne après la commutation d'état dudit dispositif électronique, le signal comprenant un identifiant dudit emballage connecté.

2. Emballage connecté (100) selon la revendication précédente, dans lequel le dispositif (150, 170, 180, 190) de détection est configuré pour commuter un mode du dispositif électronique (160) de manière concomitante à la détection de la modification de forme, sans attente d'une action complémentaire.

3. Emballage connecté (100) selon l'une quelconque des revendications précédentes, dans lequel, lorsque le dispositif électronique (160) commute entre deux modes, le dispositif (150, 170, 180, 190) de détection est configuré pour effectuer au moins l'une des actions supplémentaires parmi les suivantes :
• modifier l'état allumé ou éteint du dispositif électronique ;
• connecter le dispositif électronique à une alimentation électrique ou à une carte comprise dans l'emballage connecté ;
• appairer le dispositif électronique, par l'intermédiaire d'un identifiant associé au dispositif, avec un service informatique opéré à distance ;
• déclencher une action immédiate ou différée du dispositif électronique, tel que l'émission d'un signal ou la mise en marche d'une machine à état.

4. Emballage connecté (100) selon l'une quelconque des revendications précédentes, dans lequel le dispositif (150, 170, 180, 190) de détection d'une modification de forme comprend au moins une boucle (155, 175, 185, 195) à encre conductrice.

5. Emballage connecté (100) selon l'une quelconque des revendications précédentes, dans lequel le dispositif (150, 170, 180, 190) de détection comprend un moyen de mesure d'une variation d'impédance.

6. Emballage connecté (100) selon l'une quelconque des revendications précédentes, dans lequel le dispositif (150, 170, 180, 190) de détection d'une modification de forme comprend un fil fusible.

7. Emballage connecté (100) selon l'une quelconque des revendications précédentes, dans lequel le dispositif électronique est configuré pour émettre au moins un signal en fonction du mode du dispositif électronique (160) et/ou en fonction de la valeur d'au moins un capteur.

8. Emballage connecté (100) selon l'une quelconque des revendications précédentes, configuré pour être globalement plat dans une première configuration dite de stockage et pour former un contenant en volume dans une deuxième configuration dite pliée, le dispositif électronique (160) étant en sommeil dans la configuration de stockage et activé dans la configuration pliée.

9. Emballage connecté (100) selon l'une quelconque des revendications précédentes, dans lequel tout ou partie du dispositif électronique est porté par une partie détachable (136, 191) dudit emballage connecté.

10. Emballage connecté (100) selon l'une quelconque des revendications précédentes, globalement formé en carton multicouche délimité par deux couches externes, dans lequel tout ou partie du dispositif électronique (160) est compris entre les deux couches externes du carton.

11. Emballage connecté (100) selon l'une quelconque des revendications précédentes, dans lequel le dispositif électronique comprend un dispositif (165) de stockage d'une énergie électrique alimentant le dispositif électronique (160).

12. Procédé (300) d'activation d'un emballage connecté (100) selon l'une quelconque des revendications précédentes, **caractérisé en ce qu'**il comprend des étapes de :
• détection (310) d'une modification de forme de l'emballage connecté ;
• changement (320) d'un mode du dispositif électronique de l'emballage connecté, à la suite de la détection de la modification de forme.

13. Procédé (300) d'activation selon la revendication précédente, **caractérisé en ce qu'**il comprend également des étapes de :
• transmission (330) par le dispositif électronique de l'emballage connecté d'un signal comprenant un identifiant dudit emballage connecté à une borne d'un réseau de télécommunication à proximité de l'emballage connecté ;
• appairage (340) dudit emballage connecté à un service informatique opéré par une unité de traitement informatique connectée à la borne.

14. Procédé (300) d'activation selon la revendication précédente, dans lequel une identification physique de l'emballage connecté (100) est associée à une identification logique du service informatique, l'identification logique pouvant être un numéro de commande.

15. Procédé (300) d'activation selon l'une quelconque des revendications 13 à 14, comprenant également une étape de détection et de suivi (390) dudit emballage connecté (100) dans un environnement, tel qu'un centre de tri ou une zone de couverture d'un réseau de télécommunications.

16. Procédé (300) d'activation selon l'une quelconque des revendications 13 à 15, comprenant également une étape d'activation (350) d'une machine à état côté réseau en fonction des données d'un message transmis par l'emballage connecté et/ou en fonction de métadonnées élaborées par le réseau et/ou du mode d'activation de l'emballage connecté (100) et/ou d'un identifiant logique associé à l'emballage connecté (100).

17. Procédé (300) d'activation selon la revendication précédente dans lequel la machine à état activé côté réseau permet d'allouer au dispositif électronique (160) de l'emballage connecté (100) au moins un abonnement à au moins un service.

18. Procédé (300) d'activation selon l'une quelconque des revendications 13 à 17, comprenant également une étape d'activation (360) d'une machine à état côté emballage connecté, à la suite d'une réception d'un message envoyé par le réseau.

## Patentansprüche

1. Vernetzte Verpackung (100), umfassend eine elektronische Vorrichtung (160), und ferner umfassend mindestens eine Vorrichtung (150, 170, 180, 190) zur Erfassung einer Formänderung der vernetzten Verpackung, wobei mindestens eine Erfassungsvorrichtung dazu ausgebildet ist, bei Erfassung der Formänderung einen Modus der elektronischen Vorrichtung umzuschalten, **dadurch gekennzeichnet, dass** das Umschalten eine Änderung einer Sendekonfiguration mindestens eines Signals durch die elektronische Vorrichtung bewirkend, wobei die Sendekonfiguration mindestens eines der Folgenden umfasst:
• (i) eine Sendefrequenz,
• (ii) einen Typ übertragener Daten,
wobei die elektronische Vorrichtung (160) eine Antenne und einen Sender zum Senden eines Signals über die Antenne nach dem Zustandswechsel der elektronischen Vorrichtung umfasst, wobei das Signal eine Kennung der vernetzten Verpackung umfasst.

2. Vernetzte Verpackung (100) nach dem vorhergehenden Anspruch, wobei die Erfassungsvorrichtung (150, 170, 180, 190) dazu ausgebildet ist, einen Modus der elektronischen Vorrichtung (160) gleichzeitig mit der Erfassung der Formänderung umzuschalten, ohne auf eine zusätzliche Aktion zu warten.

3. Vernetzte Verpackung (100) nach einem der vorhergehenden Ansprüche, wobei, wenn die elektronische Vorrichtung (160) zwischen zwei Modi umschaltet, die Erfassungsvorrichtung (150, 170, 180, 190) dazu ausgebildet ist, mindestens eine der folgenden zusätzlichen Aktionen durchzuführen:
• Ändern des Ein- oder Ausschaltzustands der elektronischen Vorrichtung;
• Verbinden der elektronischen Vorrichtung mit einer Stromversorgung oder mit einer in der vernetzten Verpackung enthaltenen Karte;
• Koppeln der elektronischen Vorrichtung, mittels einer der Vorrichtung zugeordneten Kennung, mit einem fernbetriebenen Computerdienst;
• Auslösen einer unmittelbaren oder verzögerten Aktion der elektronischen Vorrichtung, wie beispielsweise das Aussenden eines Signals oder das Einschalten eines Zustandsautomaten.

4. Vernetzte Verpackung (100) nach einem der vorhergehenden Ansprüche, wobei die Formänderungs-Erfassungsvorrichtung (150, 170, 180, 190) mindestens eine Schleife (155, 175, 185, 195) aus leitfähiger Tinte umfasst.

5. Vernetzte Verpackung (100) nach einem der vorhergehenden Ansprüche, wobei die Erfassungsvorrichtung (150, 170, 180, 190) ein Mittel zur Messung einer Impedanzänderung umfasst.

6. Vernetzte Verpackung (100) nach einem der vorhergehenden Ansprüche, wobei die Formänderungs-Erfassungsvorrichtung (150, 170, 180, 190) einen Schmelzdraht umfasst.

7. Vernetzte Verpackung (100) nach einem der vorhergehenden Ansprüche, wobei die elektronische Vorrichtung dazu ausgebildet ist, mindestens ein Signal in Abhängigkeit von dem Modus der elektronischen Vorrichtung (160) und/oder in Abhängigkeit von dem Wert mindestens eines Sensors zu senden.

8. Vernetzte Verpackung (100) nach einem der vorhergehenden Ansprüche, die dazu ausgebildet ist, in einer ersten, sogenannten Lagerkonfiguration im Allgemeinen flach zu sein und in einer zweiten, sogenannten gefalteten Konfiguration einen Volumenbehälter zu bilden, wobei die elektronische Vorrichtung (160) in der Lagerkonfiguration im Ruhemodus und in der gefalteten Konfiguration aktiviert ist.

9. Vernetzte Verpackung (100) nach einem der vorhergehenden Ansprüche, wobei die elektronische Vorrichtung ganz oder teilweise von einem abnehmbaren Abschnitt (136, 191) der vernetzten Verpackung getragen wird.

10. Vernetzte Verpackung (100) nach einem der vorhergehenden Ansprüche, im Allgemeinen aus mehrschichtigem Karton gebildet, der durch zwei äußere Schichten begrenzt ist, wobei die elektronische Vorrichtung (160) ganz oder teilweise zwischen den beiden äußeren Schichten des Kartons angeordnet ist.

11. Vernetzte Verpackung (100) nach einem der vorhergehenden Ansprüche, wobei die elektronische Vorrichtung eine Vorrichtung (165) zur Speicherung elektrischer Energie umfasst, die die elektronische Vorrichtung (160) versorgt.

12. Verfahren (300) zur Aktivierung einer vernetzten Verpackung (100) nach einem der vorhergehenden Ansprüche, **dadurch gekennzeichnet, dass** es die folgenden Schritte umfasst:
• Erfassen (310) einer Formänderung der vernetzten Verpackung;
• Ändern (320) eines Modus der elektronischen Vorrichtung der vernetzten Verpackung im Anschluss an die Erfassung der Formänderung.

13. Aktivierungsverfahren (300) nach dem vorhergehenden Anspruch, **dadurch gekennzeichnet, dass** es ferner die folgenden Schritte umfasst:
• Übertragen (330), durch die elektronische Vorrichtung der vernetzten Verpackung, eines Signals, das eine Kennung der vernetzten Verpackung umfasst, an ein Terminal eines Telekommunikationsnetzes in der Nähe der vernetzten Verpackung;
• Koppeln (340) der vernetzten Verpackung mit einem Computerdienst, der von einer mit dem Terminal verbundenen Datenverarbeitungseinheit betrieben wird.

14. Aktivierungsverfahren (300) nach dem vorhergehenden Anspruch, wobei eine physische Identifizierung der vernetzten Verpackung (100) einer logischen Identifizierung des Computerdienstes zugeordnet wird, wobei die logische Identifizierung eine Kontrollnummer sein kann.

15. Aktivierungsverfahren (300) nach einem der Ansprüche 13 bis 14, ferner umfassend einen Schritt des Erfassens und Verfolgens (390) der vernetzten Verpackung (100) in einer Umgebung, wie beispielsweise einem Sortierzentrum oder einem Abdeckungsbereich eines Telekommunikationsnetzes.

16. Aktivierungsverfahren (300) nach einem der Ansprüche 13 bis 15, ferner umfassend einen Schritt des Aktivierens (350) eines netzwerkseitigen Zustandsautomaten in Abhängigkeit von den Daten einer von der vernetzten Verpackung übertragenen Nachricht und/oder in Abhängigkeit von vom Netzwerk erzeugten Metadaten und/oder von dem Aktivierungsmodus der vernetzten Verpackung (100) und/oder von einer der vernetzten Verpackung (100) zugeordneten logischen Kennung.

17. Aktivierungsverfahren (300) nach dem vorhergehenden Anspruch, wobei der netzwerkseitig aktivierte Zustandsautomat es ermöglicht, der elektronischen Vorrichtung (160) der vernetzten Verpackung (100) mindestens ein Abonnement für mindestens einen Dienst zuzuweisen.

18. Aktivierungsverfahren (300) nach einem der Ansprüche 13 bis 17, ferner umfassend einen Schritt des Aktivierens (360) eines verpackungsseitigen Zustandsautomaten im Anschluss an einen Empfang einer vom Netzwerk gesendeten Nachricht.

## Claims

1. A connected packaging (100), comprising an electronic device (160), and also comprising at least one device (150, 170, 180, 190) for detecting a change in the shape of said connected packaging, at least one detection device being configured to switch a mode of the electronic device upon detection of said change, **characterised in that** the switching entailing a modification of an emission configuration of at least one signal by the electronic device, the emission configuration comprising at least one of:
• (i) an emission frequency,
• (ii) a type of transmitted data,
wherein the electronic device (160) comprises an antenna and an emitter of a signal by said antenna after state switch of said electronic device, the signal comprising an identifier of said connected packaging.

2. The connected packaging (100) according to the preceding claim, wherein the detection device (150, 170, 180, 190) is configured to switch a mode of the electronic device (160) concomitantly with the detection of the shape change, without waiting for a complementary action.

3. The connected packaging (100) according to any one of the preceding claims, wherein, when the electronic device (160) switches between two modes, the detection device (150, 170, 180, 190) is configured to perform at least one of the following additional actions:
• modifying the on or off state of the electronic device;
• connecting the electronic device to a power supply or a board included in the connected packaging;
• pairing the electronic device, via an identifier associated with the device, with a remotely-operated computer service;
• triggering an immediate or delayed action of the electronic device, such as emitting a signal or turning on a state machine.

4. The connected packaging (100) according to any one of the preceding claims, wherein the shape change detection device (150, 170, 180, 190) comprises at least one conductive ink loop (155, 175, 185, 195).

5. The connected packaging (100) according to any one of the preceding claims, wherein the detection device (150, 170, 180, 190) comprises a means for measuring an impedance variation.

6. The connected packaging (100) according to any one of the preceding claims, wherein the shape change detection device (150, 170, 180, 190) comprises a fusible wire.

7. The connected packaging (100) according to any one of the preceding claims, wherein the electronic device is configured to emit at least one signal according to the mode of the electronic device (160) and/or according to the value of at least one sensor.

8. The connected packaging (100) according to any one of the preceding claims, configured to be generally flat in a first so-called storage configuration and to form a volume container in a second so-called folded configuration, the electronic device (160) being in a sleep mode in the storage configuration and activated in the folded configuration.

9. The connected packaging (100) according to any one of the preceding claims, wherein all or part of the electronic device is carried by a detachable portion (136, 191) of said connected packaging.

10. The connected packaging (100) according to any one of the preceding claims, generally formed of multilayer cardboard delimited by two outer layers, wherein all or part of the electronic device (160) is comprised between the two outer layers of the cardboard.

11. The connected packaging (100) according to any one of the preceding claims, wherein the electronic device comprises a device (165) for storing an electrical energy powering the electronic device (160).

12. A method (300) for activating a connected packaging (100) according to any one of the preceding claims, **characterised in that** it comprises steps of:
• detecting (310) a change of the shape of the connected packaging;
• changing (320) a mode of the electronic device of the connected packaging, following the detection of the shape change.

13. The activation method (300) according to the preceding claim, **characterised in that** it also comprises steps of:
• transmitting (330) by the electronic device of the connected packaging a signal comprising an identifier of said connected packaging to a terminal of a telecommunication network proximate to the connected packaging;
• pairing (340) said connected packaging with a computer service operated by a computer processing unit connected to the terminal.

14. The activation method (300) according to the preceding claim, wherein a physical identification of the connected packaging (100) is associated with a logical identification of the computer service, the logical identification possibly being a control number.

15. The activation method (300) according to any one of claims 13 to 14, also comprising a step of detecting and tracking (390) said connected packaging (100) in an environment, such as a sorting centre or a coverage area of a telecommunications network.

16. The activation method (300) according to any one of claims 13 to 15, also comprising a step of activating (350) a network-side state machine according to the data of a message transmitted by the connected packaging and/or according to metadata elaborated by the network and/or the activation mode of the connected packaging (100) and/or a logical identifier associated with the connected packaging (100).

17. The activation method (300) according to the preceding claim, wherein the network-side activated state machine allows allocating to the electronic device (160) of the connected packaging (100) at least one subscription to at least one service.

18. The activation method (300) according to any one of claims 13 to 17, also comprising a step of activating (360) a connected packaging-side state machine, following a reception of a message sent by the network.
